(19) Europäisches Patentamt
European Patent Office
Office européen des brevets

(11) Veröffentlichungsnummer: **0 219 796**
**A2**

(12) **EUROPÄISCHE PATENTANMELDUNG**

(21) Anmeldenummer: **86114178.6**

(51) Int. Cl.[4]: **C09K 3/10** , C08L 33/00

(22) Anmeldetag: **14.10.86**

(30) Priorität: **18.10.85 DE 3537099**

(43) Veröffentlichungstag der Anmeldung:
**29.04.87 Patentblatt 87/18**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Hummerich, Rainer, Dr.**
**Grosser Riedweg 17**
**D-6520 Worms 27(DE)**
Erfinder: **Kast, Hans, Dr.**
**Neue Heimat 28**
**D-6800 Mannheim 31(DE)**
Erfinder: **Krobb, Joachim**
**Helmbachstrasse 23**
**D-6740 Landau(DE)**

# (54) Dichtungsmassen auf Basis von Copolymerisat-Dispersionen mit verbesserter Haftung und erhöhtem Rückstellvermögen.

(57) Dichtungsmassen, die als Bindemittel ein Gemisch aus

(A) 55 bis 70 gewichts%igen wäßrigen Dispersionen von Copolymerisaten einer Glastemperatur unter 10°C aus

50 bis 99 Gew.-% Acrylsäureestern 1 bis 12 C-Atome enthaltender nicht tertiärer Alkanole,

0 bis 50 Gew.-% Methacrylsäureestern 1 bis 18 C-Atome enthaltender Alkanole und/oder Vinylestern 2 bis 12 C-Atome enthaltender Carbonsäuren und/oder (Meth)Acrylnitril und/oder Styrol und/oder tert. Butylacrylat,

0,5 bis 5 Gew.-% 3 bis 5 C-Atome enthaltenden monoolefinisch ungesättigten Mono-und/oder Di-Carbonsäuren und deren gegebenefalls an den N-Atomen durch 1 bis 4 C-Atome enthaltenden, durch Alkyl-oder Alkylolgruppen substituierten Amiden und

0,5 bis 5 Gew.-% Carbonylgruppen aufweisenden Monomeren,

(B) je Mol in den Copolymerisaten enthaltenden Carbonylgruppen 0,1 bis 1 Mol einer wasserlöslichen Dihydrazin-Verbindung und

(C) je Mol in den Copolymerisaten enthaltenden Carbonsäuregruppen 0,1 bis 1 Val, bezogen auf die Carboxygruppen des Copolymerisats, eines wasserlöslichen Zink-tetraminkomplexes enthalten, zeichnen sich durch besonders gute Haftung auf saugenden Untergründen und besonders gutes Rückstellvermögen aus.

EP 0 219 796 A2

# Dichtungsmassen auf Basis von Copolymerisat-Dispersionen mit verbesserter Haftung und erhöhtem Rückstellvermögen

Spritzbare Dichtungsmassen auf der Basis von Polymerdispersionen und deren Formulierungen werden u.a. in der Technischen Information "Spritzbare Dichtungsmassen" der BASF beschrieben.

Typische Dichtungsmassen, die auf der Basis von Acrylatcopolymerdispersionen aufgebaut sind, zeigen ein ausgeprägt plastisches Verhalten, das sich in relativ niedrigem Rückstellvermögen äußert. Ferner weisen diese Dichtungsmassen ungenügende Haftung auf nicht porösen Untergründen auf. Daher wird entweder die Verwendung von Primern oder die Zugabe von organofunktionellen Silanen (z.B. Glydidyloxypropyltrimethoxysialn) bei der Formulierung von Dichtungsmassen empfohlen. Die Haftverbesserung von Silanen beschränkt sich jedoch im wesentlichen auf silikatische Untergründe. Ein weiterer Nachteil derartiger Systeme ist der Abfall der Wirksamkeit in Abhängigkeit von der Lagerdauer und die mangelnde Lagerstabilität derartiger Formulierungen.

Es wurde nun gefunden, daß Dichtungsmassen, die als Bindemittel ein Gemisch aus

(A) 55-70gewichts%igen wäßrigen Dispersionen von Copolymerisaten einer Glastemperatur unter 10°C aus

50 bis 99 Gewichts-% Acrylsäureestern 1 bis 12 C-Atome enthaltender nicht tertiärer Alkanole,

0 bis 50 Gewichts-% Methacrylsäureestern 1 bis 18 C-Atome enthaltender Alkanole und/oder Vinylestern 2 bis 10 C-Atome enthaltender Carbonsäuren und/oder (Meth)Acrylnitril und/oder Styrol und/oder tert. Butylacrylat,

0,5 bis 5 Gewichts-% 3-5 C-Atome enthaltenden monoolefinisch ungesättigten Mono-und/oder Di-Carbonsäuren und deren gegebenenfalls an den N-Atomen durch 1 bis 4 C-Atome enthaltende Alkyl- oder Alkylolgruppen substituierten Amiden und

0,5 bis 5 Gewichts-% Carbonylgruppen aufweisenden Monomeren,

(B) je Mol in den Copolymerisaten enthaltende Carbonylgruppen 0,1 bis 1 Mol einer wasserlöslichen Dihydrazin-Verbindung und

(C) je Mol in den Copolymerisaten enthaltenen Carbonsäuregruppen 0,1 bis 1 Val, bezogen auf die Carboxylgruppen des Copolymerisats, eines wasserlöslichen Zinktetraaminkomplexes enthalten, lagerstabil sind und erheblich bessere Haftung auf saugenden und nicht saugenden Untergründen und wesentlich bessere Eigenschaften -(Rückstellvermögen) aufweisen als vergleichbare Produkte des Standes der Technik.

Die Verwendung von Zinkkomplexen in Verbindung mit wäßrigen carboxylgruppenhaltigen Polymerdispersionen zur Vernetzung der daraus gebildeten Polymerfilme ist zwar z.B. in der GB-PS 1 254 294, der EP-PS 6 547 und den DE-OSen 20 20 496 und 23 55 364 beschrieben, und in der GB-PS 20 70 635 werden hochgefüllte Dispersionen beansprucht, die Zinkammoniumcarbonat enthalten, und die als Klebestoffe verwendet werden, die Beschichtungen mit besserer Haftung unter Wassereinwirkung ergeben.

Auch die Umsetzung von carboxylgruppenhaltigen Polymeren mit mehrfunktionellen Hydrazinderivaten zur Herstellung vernetzter Polymerisate wurde schon in mehreren Patentschriften beschrieben, z.B. in der DE-OS 14 95 706 (Ketogruppenhaltige Polymerisate werden mit mehrfunktionellen Carbonsäurehydraziden umgesetzt), in der US-Patentschrift 4 210 565 (hier wird die Vernetzung von aldehydgruppenhaltigen Polymerisaten mit mehrfunktionellen Carbonsäurehydraziden oder -hydrazonen im Zusammenhang mit Überzügen offenbart) und in der EP-PS 3 516 (hier wird gezeigt, daß carbonylgruppenhaltige Copolymerisate allgemein mit mehrfunktionellen organischen Hydrazinderivaten in Gegenwart von Schwermetallsalzen vernetzt werden). Derartige vernetzte Polymerisate zeichnen sich dadurch aus, daß sie in organischen Lösungsmitteln unlöslich sind. Sie werden deshalb bevorzugt als Bindemittel für Anstrichstoffe und Beschichtungen (EP-PS 5 167) sowie als Bindemittel für Faservliese eingesetzt. Schließlich sind Haftklebstoffe auf Basis von Dispersionen von Copolymerisaten carbonylgruppenhaltiger Monomerer, die wasserlösliche Dihydrazinverbindungen enthalten, Gegenstand der DE-OS 33 19 240.

Keine der vorbeschriebenen Maßnahmen führt aber ohne weiteres zu Dichtungsmassen gemäß der vorliegenden Erfindung.

Die für das erfindungsgemäße Bindemittel geeigneten 55 bis 70gewichts%igen Copolymerisat-Dispersionen können in üblicher Weise durch Polymerisation der Monomeren in wäßriger Emulsion unter Verwendung der üblichen Dispergierhilfsmittel und der üblichen radikalbildenden Polymerisationsinitiatoren hergestellt sein, wobei nach dem Monomeren-oder Emulsionszulaufverfahren bei den üblichen Temperaturen gearbeitet worden sein kann. Als Acrylsäureester kommen z.B. Methyl-, Ethyl-, Isopropyl-, n-Butyl-, Isobutyl-, n-Hexyl-, 2-Ethylhexyl-und ferner Decyl-

und Dode cylacrylat in Betracht, von denen die 4 bis 8 C-Atome im Alkoholrest enthaltenden Acrylester vorgezogen werden. Als Methacrylsäureester seien vor allem Methyl-, Isobutyl-, n-Butyl-, tert-Butyl-und 2-Ethylhexylmethacrylat sowie ferner Dodecyl-und Stearylmethacrylat genannt. Geeignete Vinylester sind vor allem Vinylacetat und Vinylpropionat sowie ferner Vinylbutyrat, Vinyldecanoat und Vinyllaurat.

Als monoolefinisch ungesättigte Carbonsäuren kommen vor allem Acryl-und Methacrylsäure sowie ferner Crotonsäure, Maleinsäure, Fumarsäure und Itaconsäure in Frage, die vorzugsweise in einem Anteil von 1 bis 2,5 Gewichtsprozent, bezogen auf die gesamten Monomeren, eingesetzt werden. Von diesen leiten sich die gleichfalls als Comonomere geeigneten Amide und deren Derivate ab, nämlich insbesondere Acryl-und Methacrylamid, N-Methylol-acryl-und -meth-acrylamid, N-Methyl-, N-Ethyl-, N-n-Butyl-acryl-und -meth-acrylamid, sowie ferner Crotonsäureamid, N-Methylol-crotonsäureamid, Maleinsäuremono-und diamid, Fumarsäurediamid und Itaconsäurediamid.

Als Carbonylgruppen aufweisende Monomere haben sich vor allem Diacetonacryl-und -methacrylamid, Acrolein, Formylstyrol und Vinylalkylketone mit vorzugsweise 4 bis 7 C-Atomen, wie Vinylmethylketon, Vinylethylketon und Vinylisobutylketon bewährt. In Betracht kommen auch (Meth)acryloxyalkylpropanole der allgemeinen Formel (I)

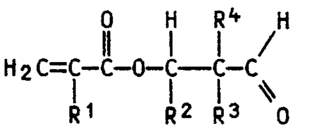 ,

in der $R^1$ für -H oder $-CH_3$, $R^2$ für -H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können nach dem Verfahren der GB-PS 1 601 077 durch Veresterung von $\beta$-Hydroxyalkylpropanalen der allgemeinen Formel (II)

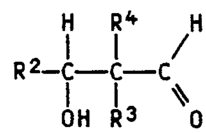 ,

in der $R^2$, $R^3$ und $R^4$ die für die allgemeine Formel -(I) angegebene Bedeutung haben, in Gegenwart von indifferenten Verdünnungsmitteln sowie geringen Mengen Sulfonsäuren und Mineralsäuren bei Temperaturen von 40 bis 129, insbesondere von 60 bis 90°C hergestellt sein. Als Ketogruppen tragende Monomere kommen ferner Diacetonacrylat, Acetonylacrylat, Diaceton(meth)actylat, 2-Hydroxypropylacrylat-acetylacetat und Butandiol-1,4-acrylat-acetylacetat in Frage. Die Menge der Carbonyl-bzw. Ketogruppen aufweisenden einpolymerisierten Comonomeren beträgt vorzugsweise 1 bis 5 Gew.-%, bezogen auf die Copolymerisate A.

Ester, wie Ethylacrylat oder Vinylacetat, oder Amide, wie Acrylamid und Carbonsäuren, wie Acrylsäure sind keine Carbonylgruppen aufweisende Monomere im Sinne der vorliegenden Erfindung, diese enthalten vielmehr Keto-und/oder Aldogruppen.

Die Glastemperatur der Copolymerisate soll unter 10°C, vorzugsweise zwischen -40 und -5°C liegen. Sie kann nach den üblichen Methodnen z.B. aus der Messung des E-Moduls oder mit der Differentialthermoanalyse bestimmt sein.

Die Copolymerisat-Dispersionen enthalten als Dispergiermittel meist 0,2 bis 3 Gew.-%, bezogen auf das Copolymerisat, anionische und/oder nichtionische Emulgatoren, wie Natrium-dialkylsulfosuccinate, Natriumsalze von sulfatierten Ölen und/oder von Alkylsulfonsäuren, Natrium-, Kalium-oder Ammoniumalkylsulfate, Alkalisalze von aromatischen Sulfonsäuren, Alkalisalze von oxalkylierten $C_{12}$ bis $C_{24}$-Fettalkoholen und von oxalkylierten $C_8$ bis $C_{12}$-Alkylphenolen, sowie Polyadditionsprodukte von Alkylenoxiden, wie besonders Ethylenoxid und/oder Propylenoxid an Fettsäuren, Fettalkohole, Fettamide und/oder Alkylphenole, ferner Natriumsalze von Fettsäuren, wie Natriumstearat und -oleat.

Die neuen Bindemittel für Dichtungsmassen enthalten in Mol der in den Copolymerisaten einpolymerisierten Carbonylmonomeren 0,1 bis 1,5, vorzugsweise 0,2 bis 0,8 Mol einer wasserlöslichen Dihydrazinverbindung. Geeignete Dihydrazin-Verbindungen sind vor allem Dihydrazide aliphatischer 2 bis 10, insbesondere 4 bis 6 C-Atome enthaltender Dicarbonsäuren, wie Oxalsäuredihydrazid, Malonsäurehydrazid, Bernsteinsäuredihydrazid,

Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisende Dihydrazine, wie Ethylen-1,2-dihydrazin, Propylen-1,3-dihydrazin und Butylen-1,4-dihydrazin.

Zusätzlich enthalten die neuen Bindemittel als Komponente C noch 0,1 bis 1,5, vorzugsweise 0,2 bis 1 Val, bezogen auf die Carboxylgruppen des Copolymerisats, eines wasserlöslichen Zinktetraminkomplexes. Als derartiger Komplex kommt vor allem Zinktetramincarbonat sowie Zinktetraminacetat sowie ferner Zinktetraminoxalat in Frage, die in üblicher Weise hergestellt sein können. Zusätzlich zu den Bindemittelkomponenten A, B und C enthalten die Dichtungsmassen im allgemeinen 30 bis 70, vorzugsweise 45 bis 60 % ihres Gewichts an Füllstoffen, wie besonders Kreiden, Talkum, Schwerspat, Microdolomit, Kaolin, Quarzmehl und/oder kolloidale Kieselsäuren, 0,2 bis 2,0 % ihres Gewichts an Pigmenten, wie Titandioxid und Eisenoxid schwarz, 5 bis 20 % ihres Gewichts an Weichmachern, wie Ester der Phthalsäure oder Adipinsäure, niedermolekulare Polyisobutene oder Polyalkylphenylether.

Auch ein Zusatz von Verdickungsmitteln, Tensiden, Dispergierhilfsmitteln für Pigmente und Füllstoffe, sowie Entschäumern ist meist von Vorteil.

Herstellung der Copolymer-Dispersion

In einem Reaktionsgefäß mit Rührer und Zulaufgefäßen werden 180 Teile Wasser, 0,8 Teile Kaliumperoxidsulfat, 0,06 Teile des Natriumsalzes eines sulfierten Umsetzungsproduktes von Isooctylphenol mit 25 Mol Ethylenoxid, 0.06 Teile eines Umsetzungsproduktes von Isooctylphenol mit 25 Mol Ethylenoxid und 6,5 Teile der Monomerenmischung aus 604 Teilen n-Butylacrylat, 16,42 Teilen Acrylnitril, 9,82 Teilen Methylmethacrylat, 13,13 Teilen Acrylsäure und 13,13 Teilen Diacetonacrylamid auf 85°C erhitzt. Nach 15 Minuten beginnt man den über 2 Stunden gleichmäßigen Zulauf einer Emulsion aus 100 Teilen Wasser, jeweils 6,0 Teilen der zuvor angegebenen Emulgatoren und den restlichen 650 Teilen der Monomermischung. Gleichzeitig werden in einem separaten Zulauf 2,5 Teile Kaliumperoxidsulfat in 80 Teilen Wasser gelöst zugegeben. Anschließend wird der Inhalt des Reaktionsgefäßes noch 1 Stunde bei 85°C gehalten.

Nach dem Abkühlen werden die bei den Beispielen und Vergleichsversuchen angegebenen Mengen der Dihydrazin-Verbindung sowie des Zink-tetraminkomplexes unter Rühren zugegeben; dabei ist es zur Verbesserung der Stabilität der Dispersion von Vorteil nochmals bis zu 6 Teile Emulgator zuzugeben.

Herstellung der Dichtungsmassen

40 Teile der 65%igen auf ph 7 gestellten Copolymer-Dispersion werden in einem Rühraggregat vorgelegt und bei niedriger Drehzahl (20 bis 30 Upm) 0,1 Teile handelsüblicher Entschäumer auf Basis Mineralöl und Silikonöl und 0,1 Teile eines handelsüblichen Pigmentverteilers auf Basis von polyacrylsaurem Natrium zugegeben. Man arbeitet dann 7 Teile handels üblichen Weichmacher auf Basis Phthalsäurebutylester sowie 1 Teil Pigment (Eisenoxid schwarz) in angepasteter Form ein. Nach einer Rührzeit von 3 Minuten gibt man 55 Teile Füllstoffgemisch in 3 Portionen zu, wobei man nach jeder Zugabe die Mischung 5 Minuten glattrührt. Nach der letzte Füllstoffzugabe wird die Masse unter vermindertem Druck (800 mbar) 5 Minuten nachgerührt, um eingeschlossene Luftblasen zu entfernen.

Beispiele

Beispiel 1

Zusätze: 17 Teile 58%ige wäßrige Zinktetramincarbonat-Lösung und 1,1 Teile Adipinsäuredihydrazid.

Beispiel 2

Zusätze: 28 Teile 58%ige wäßrige Zinktetramincarbonat-Lösung und 1,9 Teile Adipinsäuredihydrazid.

Vergleichsversuch a

n-Butylacrylat, 16,42 Teilen Acrylnitril, 9,82 Teilen Methylmethacrylat, 13,13 Teilen Acrylsäure und 13,13 Teilen Diacetonacrylamid

Zusätze: keine

Vergleichsversuch b

34 Teile 58%ige wäßrige Zinktetramincarbonat-Lösung.

<u>Vergleichsversuch</u> <u>c</u>

19 Teile Adipinsäuredihydrazid

Mit den erhaltenen Dichtungsmassen wurde die Haftung auf Glas, Aluminium, Beton und Keramikfliesen in Anlehnung an DIN 52455 T.1 durch Dehnung der Prüfkörper bis zum Bruch beurteilt. Die Ergebnisse sind in der folgenden Tabelle zusammengestellt.

Die Rückstellvermögen in % wurden nach DIN 52458 (bei Dehnwert 100 %) die Zugspannungen nach DIN 52455 T.1 (Haft-Dehnversuch)) und die Shore-Härte A nach 4 Wochen Lagerung bei 23°C und 50 % relativer Luftfeuchtigkeit bestimmt.

Tabelle

<u>Ergebnisse der Prüfungen</u>

| Beispiel Nr. | Haftungsprüfung auf Glas | Alu | Beton | Keramik | Rückstellvermögen in % | Zugspannung in N/mm² bei 50 % | bei 150 % | Shorehärte A |
|---|---|---|---|---|---|---|---|---|
| 1 | K | K | K | K | 35 | 0,34 | 0,36 | 10 |
| 2 | K | K | K | K | 48 | 0,40 | 0,51 | 15 |
| Vergleichsversuche | | | | | | | | |
| a | A | A | A | A | < 10 | 0,21 | 0,16 | 4 |
| b | A | K | K | A | < 10 | 0,27 | 0,18 | 12 |
| c | A | A | A | A | 46 | 0,43 | 0,51 | 10 |

A = Adhäsionsbruch

K = Kohäsionsbruch

**Ansprüche**

Dichtungsmassen enthaltend als Bindemittel ein Gemisch aus

(A) 55 bis 70 gewichts%igen wäßrigen Dispersionen von Copolymerisaten einer Glastemperatur unter 10°C aus

50 bis 99 Gew.-% Acrylsäureestern 1 bis 12 C-Atome enthaltender nicht tertiärer Alkanole,

0 bis 50 Gew.-% Methacrylsäureestern 1 bis 18 C-Atome enthaltender Alkanole und/oder Vinylestern 2 bis 12 C-Atome enthaltender Carbonsäuren und/oder (Meth)Acrylnitril und/oder Styrol und/oder tert. Butylacrylat,

0,5 bis 5 Gew.-% 3 bis 5 C-Atome enthaltenden monoolefinisch ungesättigten Mono-und/oder Di-Carbonsäuren und deren gegebenenfalls an den N-Atomen durch 1 bis 4 C-Atome enthaltenden, durch Alkyl-oder Alkylolgruppen substituierten Amiden und

0,5 bis 5 Gew.-% Carbonylgruppen aufweisenden Monomeren,

(B) je Mol in den Copolymerisaten enthaltenden Carbonylgruppen 0,1 bis 1 Mol einer wasserlöslichen Dihydrazin-Verbindung und

(C) je Mol in den Copolymerisaten enthaltenden Carbonsäuregruppen 0,1 bis 1 Val, bezogen auf die Carboxygruppen des Copolymerisats, eines wasserlöslichen Zink-tetraminkomplexes.